# FASCICULE DE BREVET EUROPEEN

(11) **EP 0 793 917 B1**
(45) Date de publication et mention de la délivrance du brevet: **18.12.2002**
(21) Numéro de dépôt: 96200624.3
(22) Date de dépôt: 07.03.1996
(51) Int. Cl.: A23B 7/00, A23L 3/3472, A23L 1/221

(54) **Procédé de préparation de fruits et légumes contenant des caroténoides**
Verfahren zur Herstellung von Karotenoide enthaltende Früchten und Gemüsen
Process for the preparation of fruits and vegetables conatining carotenoids

(43) Date de publication de la demande: 10.09.1997
(73) Titulaire: SOCIETE DES PRODUITS NESTLE S.A., 1800 Vevey (CH)
(72) Inventeur: Wissgott, Ulrich, CH-1814 La Tour-de-Peilz (CH)
(74) Mandataire: Thomas, Alain

(56) Documents cités:
- EP-A- 0 658 316
- WO-A-91/18058
- WO-A-94/13156
- FR-A- 983 076
- FR-A- 2 050 968
- FR-A- 2 263 705
- GB-A- 1 417 358
- US-A- 3 894 157
- DATABASE WPI Week 8847 Derwent Publications Ltd., London, GB; AN 88-336329 XP002010964 & SU-A-1 395 271 (CANNING VEGETABLES) , 15 Mai 1988
- DATABASE WPI Week 9402 Derwent Publications Ltd., London, GB; AN 94-014393 XP002010965 & SU-A-1 782 157 (KADYSHEV G G) , 15 Décembre 1992

## Description

L'invention concerne un procédé de préparation de fruits et légumes contenant des caroténoïdes.

Les caroténoïdes sont une classe de pigments dont la couleur varie entre le jaune, le rouge et l'orange, suivant le fruit ou légume considéré et la concentration dans ledit fruit ou légume. Ils comprennent le lycopène, les carotènes et la xantophylle. Ces caroténoïdes sont présents naturellement dans certains composés alimentaires ,comme les carottes, les tomates et divers autres fruits jaunes et oranges. Il est connu qu'ils peuvent se dégrader dans le temps sous l'effet de la lumière et de l'oxygène ainsi que par suite de traitements à température élevée. Divers méthodes de conservation de produits à base de fruits et légumes fabriqués industriellement sont mis en oeuvre couramment depuis longtemps, mais utilisent des conservateurs chimiques, qui sont mal acceptés par les consommateurs actuellement. Il est déjà connu de protéger par un extrait de thé les colorants du type caroténoïdes. Le brevet JP 62126953 au nom de Hasegawa KK concerne une protection des caroténoïdes par un extrait de thé et mélange de cet extrait avec les pigments à protéger. Cette méthode est destinée à la stabilisation des colorants caroténoïdes et présente différents inconvénients pour l'application aux produits alimentaires. Le premier est que si on fait une extraction du thé, on en retire que certains composés protecteurs et stabilisants et on perd encore une partie considérable des principes actifs durant la transformation en un produit commercialisable. Il peut donc arriver que certains composés pouvant être bénéfiques pour la protection desdits caroténoïdes ne soient pas présents. D'autre part, l'extraction du thé, son mélange avec les caroténoïdes extraits, la concentration et le séchage sont des étapes supplémentaires qui renchérissent le coût du produit fini. Finalement, quand on mélange l'extrait avec le produit à protéger, il y aura une consommation immédiate du composé protecteur, de sorte qu'il n'y aura pas de protection sur une longue durée.

Le brevet SU 1395271 concerne un procédé de stérilisation de tomates, dans lequel on a ajouté des épices pour obtenir un produit ayant des caractéristiques de légume frais. Le brevet FR 2050968 concerne un procédé de préparation de sauce et pâte pour pizza; le but est de proposer au consommateur un produit industriel permettant de confectionner rapidement une pizza ayant de bonnes qualités gustatives. Il n'est pas fait mention dans ces deux documents de protection de couleur de caroténoïdes.

Par contre, le brevet WO 91/18058 concerne bien la stabilisation de la couleur de tomates et de carottes. On utilise dans ce cas des émulsifiants, qui sont des composés chimiques, n'ayant aucune origine naturelle. Finalement, le brevet US 3,894,157 concerne aussi la stabilisation de couleur des carottes en utilisant un acide, comme l'acide ascorbique.

Le but de la présente invention est de mettre au point un procédé de protection des fruits et des légumes contenant des caroténoïdes, dans lequel on garantit une bonne disponibilité des composés protecteurs, on garantit sur une longue durée de stockage la protection de la couleur, on utilise que des produits naturels et alimentaires comme source de composés protecteurs et on met en contact les composés protecteurs avec les produits à protéger dans une opération intégrée dans le processus de fabrication et de stockage.

L'invention concerne un procédé de préparation de fruits et légumes contenant des caroténoïdes, pour obtenir une meilleure stabilité de la couleur, dans lequel on met en contact en phase aqueuse ledit fruit ou ledit légume avec un produit protecteur choisi dans le groupe constitué par le thé, les sous-produits de l'extraction du thé, une épice, du son de riz, des pelures et graines de tomates, des graines de paprika et leurs mélanges.

L'intérêt du procédé selon l'invention est qu'on opère directement en phase aqueuse entre le produit à protéger et le composé protecteur; il n'y a pas d'étape d'extraction suivie d'opérations supplémentaires, telles que concentration et séchage. D'autre part, on travaille avec des produits naturels et acceptables dans le domaine alimentaire. Le but est d'arriver à une protection à long terme avec une libération progressive des constituants responsables de ladite protection

Il existe selon l'invention deux possibilités pour arriver au résultat souhaité. Soit on opère par voie de blanchiment, soit on mélange le produit protecteur avec celui à protéger et on stocke ledit mélange.

Dans le cas de la mise en oeuvre du procédé par blanchiment, on met en contact le fruit ou légume avec la phase aqueuse contenant le produit protecteur à une température comprise.entre 70 et 100°C, l'élément protecteur étant présent à une teneur comprise entre 0,5 et 2 g/litre d'eau et on sépare la phase aqueuse dudit fruit ou légume. La durée de blanchiment n'est pas critique et dépend de la nature de l'élément protecteur : on laisse agir pendant un temps suffisant pour que le composé protecteur puisse réagir en faveur de la protection des pigments.

S'agissant du blanchiment, il est possible de suivre deux voies différentes. Soit on met le produit protecteur directement dans la phase aqueuse et on sépare en fin de blanchiment l'eau contenant ledit produit protecteur, soit on met l'élément protecteur dans une poche perméable et on effectue le blanchiment avec l'eau contenant la poche et le fruit ou légume à protéger. L'intérêt de la seconde solution est qu'elle simplifie l'étape de séparation de l'eau et du produit protecteur. Par poche, on entend tout conteneur permettant de loger le produit protecteur sans qu'il s'en échappe, ladite poche étant bien entendu perméable à l'eau.

Dans un mode de réalisation préféré, on effectue le blanchiment dans l'eau à une température de l'ordre de 92°C pendant une durée comprise entre 8 et 10 minutes. On sépare alors la phase aqueuse des légumes ou fruits traités et on les sèche à une température comprise entre 70°C et 100°C jusqu'à l'obtention de la consistance et déshydratation désirée. On a ainsi un produit pour lequel la dégradation des caroténoïdes est minimisée, comme il sera précisé ci-dessous en référence aux exemples.

La capacité de protection dépend de la nature du produit protecteur et de sa teneur en principe protecteur. En règle générale, avec une teneur inférieure à 0,5 g/litre d'eau en produit protecteur, on arrive difficilement au résultat escompté tandis qu'une teneur supérieure à 2 g/litre d'eau n'apporte pas d'amélioration dans la stabilisation de la couleur.

Dans le cas du second type de mise en oeuvre du procédé, on mélange le fruit ou légume avec le produit protecteur disposé dans une poche séparée ou finement moulu et on conserve le mélange ainsi obtenu. Dans cette dernière forme de mise en oeuvre, le produit protecteur sera consommé avec le fruit ou légume protégé et il faut donc que le produit protecteur ait la mouture conforme aux caractéristiques organoleptiques du produit final. De manière générale, l'addition du produit protecteur ne modifie pas l'apparence et le goût du produit protégé, sauf si on ajoute une épice à concentration élevée. Dans certains cas, on pourra même dire que la présence d'épices est souhaitée, par exemple pour de la purée de tomates utilisable comme garniture de pizzas. Dans le cas du produit protecteur dans une poche séparée, on laisse diffuser le composé protecteur pendant toute la durée de stockage et on sépare ladite poche avant consommation.

Le fruit ou le légume traité selon l'invention l'est soit sous la forme coupée, soit sous la forme de purée. Il existe de nombreux fruits et légumes qui contiennent des caroténoïdes. Selon l'invention, on envisage plus particulièrement le traitement des produits à base de tomate, de la carotte, de la pêche jaune, de l'abricot et de l'orange. Par produit à base de tomate, on peut aussi bien envisager le traitement de la purée de tomates prévue pour la fabrication des sauces pour pizzas congelées, la fabrication de ketchup, la stérilisation ou la fabrication de poudres. Par carottes, on entend aussi bien les carottes coupées que la purée de carottes pour les pots pour bébés. Les pêches et les abricots sont prévus pour être coupés en morceaux et mis dans un sirop.

S'agissant des produits protecteurs, on a constaté que les meilleurs résultats sont obtenus pour le thé avec le thé vert. Le thé vert se présente sous forme de feuilles coupées. Par sous-produits de l'extraction du thé, on entend les feuilles de thé épuisées après extraction. Le son de riz et les pelures et les graines de tomates sont des sous-produits de fabrication industrielle ayant l'avantage d'être donc peu coûteux et d'avoir un goût neutre. L'épice est choisie parmi le thym, la sauge, le romarin, l'origan et la marjolaine.

Si on travaille selon le second mode de réalisation selon l'invention, on utilise le produit protecteur à la concentration permettant d'obtenir un bon résultat. Pour le thé vert, on en utilise entre 1 et 3 g par kg de fruit ou légume traité. Pour le son de riz, on en utilise de 10 à 40 g par kg de fruit ou légume traité. Pour les pelures et graines de tomates, on les mélange à raison de 40 à 60 g par kg de fruit ou légume traité et pour les épices, à raison de 0,1 à 0,3 g par kg de légume ou fruit traité.

Dans le cas des carottes, on les traite sous forme coupée de préférence par blanchiment : dans ce cas, on les plonge dans une eau contenant des feuilles de thé vert coupé à une concentration de 1g de thé vert par litre d'eau ou du son de riz à une concentration de 10 g/l. On fait le blanchiment à 90-95°C pendant 8 à 10 minutes, on sépare la phase aqueuse et on sèche finalement les carottes coupées qui trouvent une utilisation dans les soupes déshydratées ou autres.

Dans le cas de purée de tomates, on opère plutôt selon le second mode , à savoir mélange avec des graines de tomates ou de paprika moulues ou des épices.

Avec des fruits, comme les pêches jaunes, on les dispose coupées dans un sirop et on y ajoute dans une poche séparée le produit protecteur, tel que le thé vert. On a ainsi la diffusion pendant toute la durée du stockage du composé protecteur : au moment de la consommation, il suffit simplement de séparer la poche et de la jeter.

On a constaté finalement qu'on pouvait parvenir à une synergie par mélange de plusieurs des composants protecteurs mentionnés ci-dessus et également par addition d'autres antioxydants connus, comme l'acide ascorbique. Celui-ci est alors utilisée à raison de 0,1 à 0,4 % par rapport à la phase aqueuse de fruit ou légume. Le pourcentage ci-dessus est en poids.

Pour bien mettre en évidence la réduction de la dégradation des caroténoïdes, il faut tout d'abord extraire ces pigments et ensuite faire une mesure optique pour en déterminer leur concentration. Pour l'extraction, on opère de la manière suivante : On mélange l'échantillon avec 20 ml de dichlorométhane, on homogénéise, on agite , on filtre et on lave avec un mélange de tétrahydrofurane et de dichlorométhane. On fait une décantation , on sépare la couche aqueuse supérieure et on évapore à 30°C.

L'extrait de pigments de caroténoïdes est mis en solution dans du tétrahydrofurane et on effectue une mesure de spectrophotométrie avec un appareil Hewlett Packard. La concentration, s'agissant des produits à base de tomate, est déterminée à partir de l'absorption à 478 nm. On peut ainsi comparer de façon objective la dégradation des pigments et de la couleur en présence et en l'absence des produits protecteurs.

La suite de la description est faite en relation avec les exemples.

### Exemple 1

On opère avec de l'eau contenant 1 g de thé vert par litre. On chauffe cette eau à 92°C et on y immerge des carottes coupées qu'on laisse séjourner pendant 9 minutes. On sépare l'eau contenant le thé et on sèche les carottes à 70°C pendant 4 heures pour arriver à une teneur en humidité de 30%.

Si on fait la comparaison avec des carottes ayant subi un blanchiment normal, au bout de trois mois de stockage à 37°C (test de stockage accéléré), il ne reste que 6% de beta-carotène initial, tandis qu'avec le traitement précité, on préserve 40% de beta-carotène.

### Exemple 2

On opère avec de l'eau contenant 1 g de thé vert par litre. On chauffe cette eau à 92°C et on y immerge des carottes coupées qu'on laisse séjourner pendant 9 minutes. On sépare l'eau contenant le thé et on sèche les carottes à 100°C pour arriver à une teneur en humidité d'environ 5%.

Si on fait la comparaison avec des carottes ayant subi un blanchiment normal, on constate une couleur orange plus intense indiquant une préservation des pigments au cours du séchage à haute température.

### Exemple 3

On opère avec de l'eau contenant 10 g de son de riz par litre suspendus dans un sachet en tissu filtre. On chauffe cette eau à 92°C et on y immerge des carottes coupées qu'on laisse séjourner pendant 9 minutes. On sépare l'eau et le sachet contenant le son de riz et on sèche les carottes à 70°C pendant 4 heures environ pour arriver à une teneur en humidité de 30%.

Les carottes traitées avec le son de riz ont une couleur orange très vif, sans brunissement. Si on fait la comparaison avec des carottes ayant subi un blanchiment normal, au bout de 40 jours de stockage à 37°C (test de stockage accéléré), il reste moins que 20% de caroténoïdes initiales, tandis qu'avec le traitement précité, on préserve plus de 60% des pigments.

### Exemple 4

On mélange à de la pulpe de tomate 0,2% de romarin séché et on applique cette sauce sur une pizza qui est stockée au congélateur à -25°C pendant 10 semaines. On constate par rapport à une sauce tomate de référence n'ayant pas d'addition d'épice qu'il ne reste plus que 50% des pigments, tandis que la pulpe traitée préserve sa couleur et 80% desdits pigments.

On obtient un résultat similaire avec 0,2% de marjolaine.

### Exemple 5

On mélange à de la pulpe de tomate 5% de graines de tomate et on applique cette sauce sur une pizza qui est congelée à -25°C. On constate qu'après une durée de conservation de 10 semaines, on obtient un gain de préservation des pigments par rapport à un échantillon non traité de plus de 10%.

## Revendications

1. Procédé de préparation de fruits et légumes contenant des caroténoïdes, pour obtenir une meilleure stabilité de la couleur, dans lequel on met en contact en phase aqueuse ledit fruit ou ledit légume avec un produit protecteur choisi dans le groupe constitué par le thé, du son de riz, des pelures et graines de tomates, des graines de paprika et leurs mélanges.

2. Procédé selon la revendication 1, dans lequel on met en contact le fruit ou légume avec la phase aqueuse contenant le produit protecteur à une température comprise entre 70 et 100°C, l'élément protecteur étant présent à une teneur comprise entre 0,5 et 2g/litre d'eau et on sépare la phase aqueuse dudit fruit ou légume.

3. Procédé selon la revendication 1, dans lequel on mélange le fruit ou légume avec le produit protecteur finement moulu et on conserve le mélange ainsi obtenu.

4. Procédé selon la revendication 1, dans lequel on mélange le fruit ou légume avec le produit protecteur disposé dans une poche séparée et on conserve le mélange ainsi obtenu.

5. Procédé selon l'une des revendications 1 à 4, dans lequel le fruit ou légume traité est choisi parmi la tomate, la carotte, la pêche jaune, l'abricot et l'orange.

6. Procédé selon l'une des revendications 1 à 5, dans lequel le thé utilisé est du thé vert.

7. Procédé selon les revendications 1 et 3 ou 4, dans lequel on utilise 1 à 3 g de thé vert par kg de légume ou fruit traité.

8. Procédé selon les revendications 1 et 3 ou 4, dans lequel on mélange 10 à 40 g de son de riz par kg de légume ou fruit traité.

9. Procédé selon les revendications 1 et 3 ou 4, dans lequel on mélange 40 à 60 g de graines de tomates par kg de légume ou fruit traité.

10. Procédé selon l'une des revendications 1 à 9, dans lequel on ajoute 0,1 à 0,4% d'acide ascorbique à la phase aqueuse de fruit ou légume.

## Claims

1. Method for preparing fruit and vegetables containing carotenoids, so as to obtain better colour stability, wherein the said fruit or the said vegetable is put into contact in an aqueous phase with a protective product chosen from the group consisting of tea, rice bran, tomato skins and seeds, paprika seeds and mixtures thereof.

2. Method according to claim 1, wherein the fruit or vegetable is put into contact with the aqueous phase containing the protective product at a temperature of between 70 and 100°C, the protective element being present at a concentration of between 0.5 and 2 g/litre of water and the aqueous phase is separated from the said fruit or vegetable.

3. Method according to claim 1, wherein the fruit or vegetable is mixed with the finely ground protective product and the mixture obtained in this way is preserved.

4. Method according to claim 1, wherein the fruit or vegetable is mixed with the protective product placed in a separate pocket and the mixture obtained in this way is preserved.

5. Method according to one of claims 1 to 4, wherein the treated fruit or vegetable is chosen from tomatoes, carrots, yellow peaches, apricots and oranges.

6. Method according to one of claims 1 to 5, wherein the tea used is green tea.

7. Method according to claims 1 and 3 or 4, wherein 1 to 3 g of green tea are used per kg of treated vegetable or fruit.

8. Method according to claims 1 and 3 or 4, wherein 10 to 40 g of rice bran are mixed with 1 kg of treated vegetable or fruit.

9. Method according to claims 1 and 3 or 4, wherein 40 to 60 g of tomato seeds are mixed with 1 kg of treated vegetable or fruit.

10. Method according to one of claims 1 to 9, wherein 0.1 to 0.4 % ascorbic acid is added to the fruit or vegetable aqueous phase.

## Patentansprüche

1. Verfahren zur Herstellung von Carotenoide enthaltendem Obst und Gemüse zum Erhalten einer besseren Stabilität der Farbe, bei dem man Obst oder Gemüse in wässriger Phase mit einem Schutzprodukt in Kontakt bringt, das aus der Gruppe ausgewählt ist, die aus Tee, Reiskleie, Tomatenschalen oder -kernen, Paprikakernen und ihren Mischungen besteht.

2. Verfahren nach Anspruch 1, bei dem man Obst oder Gemüse mit der das Schutzprodukt enthaltenden wässrigen Phase bei einer Temperatur zwischen 70 und 100°C in Kontakt bringt, wobei das Schutzelement in einem Gehalt zwischen 0,5 und 2g/Liter Wasser vorliegt, und die wässrige Phase vom Obst bzw. vom Gemüse trennt.

3. Verfahren nach Anspruch 1, bei dem man Obst oder Gemüse mit dem fein gemahlenen Schutzprodukt mischt und die auf diese Weise erhaltene Mischung lagert.

4. Verfahren nach Anspruch 1, bei dem man Obst oder Gemüse mit dem in einem getrennten Beutel angeordneten Schutzprodukt mischt und die auf diese Weise erhaltene Mischung lagert.

5. Verfahren nach einem der Ansprüche 1 bis 4, bei dem das behandelte Obst oder Gemüse aus Tomaten, Karotten, gelben Pfirsichen, Aprikosen und Orangen ausgewählt ist.

6. Verfahren nach einem der Ansprüche 1 bis 5, bei dem der verwendete Tee grüner Tee ist.

7. Verfahren nach den Ansprüchen 1 und 3 oder 4, bei dem man 1 bis 3 g grünen Tee pro kg behandeltem Gemüse oder Obst verwendet.

8. Verfahren nach den Ansprüchen 1 und 3 oder 4, bei dem man 10 bis 40 g Reiskleie pro kg behandeltem Gemüse oder Obst beimischt.

9. Verfahren nach den Ansprüchen 1 und 3 oder 4, bei dem man 40 bis 60 g Tomatenkerne pro kg behandeltem Gemüse oder Obst beimischt.

10. Verfahren nach einem der Ansprüche 1 bis 9, bei dem man der wässrigen Obst- oder Gemüsephase 0,1 bis 0,4% Ascorbinsäure zusetzt.
